# EUROPEAN PATENT APPLICATION

(11) **EP 1 038 842 A1**
(43) Date of publication of application: **27.09.2000**
(21) Application number: 99924048.4
(22) Date of filing: 17.05.1999
(51) Int. Cl.: C03B 9/195

(54) **APPARATUS FOR LOADING AND UNLOADING GLASS ARTICLES OR SIMILAR**

(30) Priority: 18.05.1998 MX 9803909
(71) Applicant: Vitrocrisa, S.A. de C.V., Monterrey, Nuevo Leon 64580 (MX)
(72) Inventor: GOMEZ SANCHEZ, Abel, Monterrey, Nuevo Leún 64580 (MX); MENDIOLA LOZANO, Francisco, Monterrey, Nuevo Leún 47900 (MX)
(74) Representative: Altenburg, Udo, Dipl.-Phys.
(86) International application number: MX9900012
(87) International publication number: WO9959927

(57) **Abstract**

The present invention is referred to an apparatus for loading and unloading glass articles or similar articles which comprises a fixed supporting structure, the supporting structure including a central shaft. A rotative supporting structure attached in axial coincidence with the central shaft. Transportation stations are spaced from each other and which are attached on said rotative supporting structure. Driving means are attached to the rotative supporting structure for trasmitting movement to the rotative supporting structure in a pre-established time relation, between a loading position and an unloading position. A transference and holding mechanism by each one of the transporting stations for holding and inverting the glass articles in a about of 180°, between the article loading position and the article unloading position. Control means are connected to the rotative supporting structure and to the transference and holding mechanisms in order to provide an operation sequence to said apparatus.

## Description

### BACKGROUND OF THE INVENTION

In the manufacture of glass articles such as glasses (low weight) or lamp tubing of the convex type, etc. (up to 6 kg. in weight), once that the said articles have been manufactured in the forming machines, it is necessary to transfer them through adequate means to a cutting machine for cutting off excesss ends of hollow glass articles and so final finish is given to the article. Once this last operation is carried out, the glass articles are transported to an annealing lehr where the glass tensile stresses that were acquired during the manufacturing process are released.

The feeding of the glass articles into the cutting machines for cutting the glass articles is not a new method since there are different and varied patents within this field. However, one of the objectives sought is to produce the best possible quality articles at a high rate of production and at a low cost.

An example of an apparatus for the loading and unloading of articles is shown by the USA Patent No. 4,687,503 of Valdes-Neri, et al, and which is made up by three stations that are geometrically placed at 120° from each other, for the reception, feeding and delivery of the articles. This apparatus has a supporting structure with a vertical shaft; means of rotating transference that are attached in axial coincidence with the said vertical shaft in order to hold and transpor the articles; cams are attached to the vertical shaft, wherein said transference means are placed in order to determine through its cams the path that must be imparted to said transference means, and drive means attached to said transference means in order to make them rotate to a predetermined time relationship, at the stations of reception, feeding and delivery of articles.

The mentioned loading and unloading apparatus has the characteristic that it receives at any of its stations the articles handled by the article shaping machine, and once the it receives them, it gyrates towards another position until the article being moved coincides with a burner of a cutting machine, wherein the glass in excess is removed. Once this last operation is carried out, the apparatus rotates again to deliver the articles to an article transference mechanism which deposits them onto a belt conveyor which takes them into an annealing lehr.

However, this type of apparatus is used for glass articles wherein it is necessary to cut off the excess in both ends of a glas article, i.e., a top end and a lower end, such as in the case of a kerosene lamp. By means of this apparatus, the articles are positioned onto the feeding station in front of a cutting machine, lie the one that that is shown in USA patent No. 4,572,732.

In this case, the machine shown in patent 4,572,732 effects the cut off of both excess ends in a simultaneously way, so that while the lower cut is carried out , the lower excess glass that was cut falls off by gravity and the upper excess cut is retained by a holding mechanism which holds it momentarily until the loading and unloading apparatus moves to the delivery station.

One of the disadvantages of the article loading and unloading apparatus shown in USA patent No. 4,687,503 is that the articles are transported just as they are extracted from the forming machine, i.e., in a vertical position, with an open section in the upper part and another open section at the lower part.

However, in the manufacture of glass articles not all of the articles need to be cut at both ends, and in the majority of cases, only the upper part of the article must be cut and given a final finish.

In the latter case, the most convenient thing is to transport and place the article with the open section looking downwards, so that when the excess of glass in the article is cut, this falls directly by gravity.

The present invention has to do with a loading and unloading glass article apparatus, which, during the article transference cycle, permits an 180° inversion of the article, in order to facilitate the cutting of the excess end of the article. This apparatus includes four transportation stations that are spaced at 90° from each other and which are mounted around an indexed gyratory support, each station including article rotation transference means and means which hold the articles that travel from a first position, wherein the article is loaded upside down, to a second position, where the article transference means and the holding means are inverted 180° leaving the article in an upside-down position, until the article arrives to the position of unloading the articles, and finally to a fourth position wherein the article rotation transference means and the said holding means are returned to their original position before arriving again to the article reception station; and control means that are coupled to the article transference means and to the article holding means in order to provide the operation driving sequence of the apparatus.

### OBJECTIVES OF THE INVENTION

Therefore, the first objective of the present invention is to provide an apparatus for loading and unloading articles for a glass article forming machine, that has a unidirectional indexed rotation movement with four stations, each one having rotating means for article transference and holding means that are used to invert the glass with a 180° angle between the loading and unloading positions.

An additional objective of the present invention is to provide a loading and unloading apparatus for a glass article forming machine, which will provide an indexed movement, in such a way that the articles can be handled simultaneously during the entire operation cycle of the apparatus.

An additional objective of the present invention is to provide a loading and unloading apparatus for a glass article forming machine, whose movement is synchronized with a glass article forming machine and a glass article cutting machine.

Another objective of the present invention is to provide a loading and unloading apparatus for a glass article forming machines which includes arms with intermediate guides to hold the article around its middle during the inverting process.

An additional objective of the present invention is to provide a loading and unloading apparatus for a glass article forming machine that includes a finger opening and closing mechanism that opens and closes the fingers for holding the articles.

An additional objective of the present invention is to provide an article loading and unloading apparatus for a glass forming machine which can handle articles having different heights and different geometrical shapes.

These and other objectives of the present invention will be evident to experts in the field from the following detailed description of the invention which will be made with reference to the drawings which are attached to the present request and as an illustration of the invention, that must be considered to be illustrative but not limiting the present invention.

### BRIEF DESCRIPTION OF THE DRAWINGS

Figure 1 is a plan upper view of the loading and unloading apparatus for a glass article forming machine of the present invention, showing its four transportation stations spaced at 90° from each other and mounted around an indexed gyratory support.
Figure 2, is a transversal view, showing the lateral elevation of the apparatus shown in Figure 1.
Figure 3 is an elevated detailed view of the rotation means of article transference and the article holding means shown in Figure 1; and ,
Figures 4a and 4b are detailed views of a rotating transference mechanism of this invention.

### DETAILED DESCRIPTION OF THE INVENTION

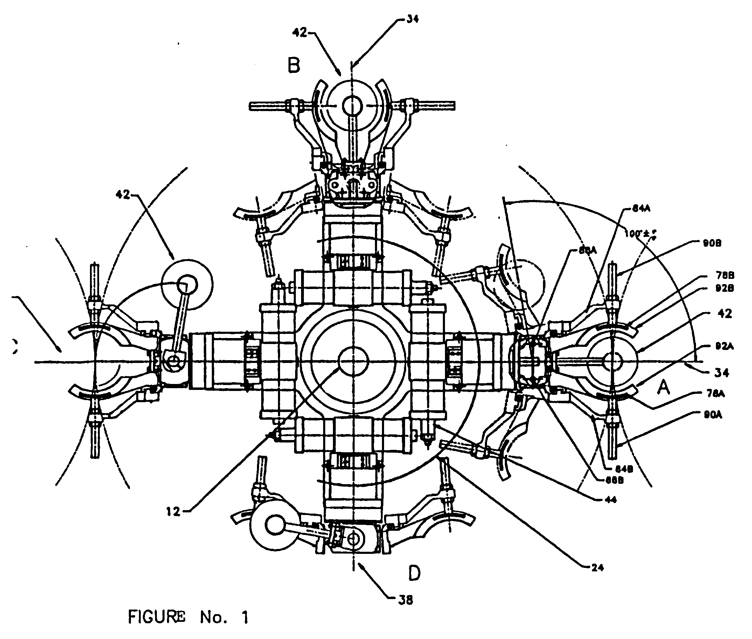

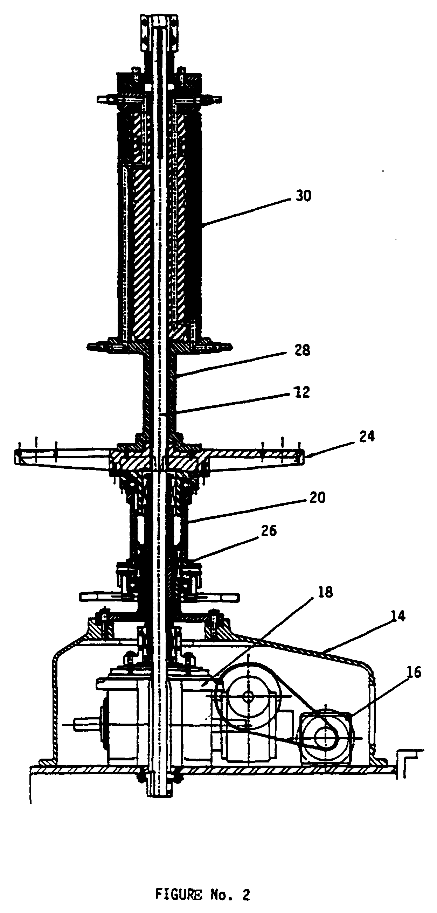

Now making a more particular reference to the drawings, figures 1 and 2, show a loading and unloading apparatus 10 of the present invention, with four transportation stations, A, B, C and D which are spaced at 90° from each other. The apparatus of the invention 10 includes: a central shaft 12 which is coupled to a lower supporting structure, 14 wherein a driving motion is installed 16 and a driving mechanism 18. On top of the supporting structure 14 an adjustable structure is placed 20 in axial coincidence with the central shaft 12). Said adjustable structure 20 supports a rotation table 24, which rotates with an intermittent movement through an indexed rotation between an article loading and an unloading position. A hollow shaft 26 located in axial coincidence with the central shaft 12 which is connected by its upper end to the rotation table 24, and, by its lower end to the driving system 18 thus transmitting the movement of said driving systems 18 of said rotation table 24.

On the upper part of the rotation table 24 is located a support 28 which, in turn, supports a rotation device 30 of sixteen ports for supplying air under pressure to the different mechanisms of the apparatus 10 as will be described further on.

Table 24 also includes, on its upper part, four article transference stations 32, 34, 36 and 38, each one having a group of mechanisms: a finger opening and closing mechanism 40, a bottom arm mechanism 42 and an inversion mechanism 44. All of the mechanisms previously mentioned are pneumatically operated and their operation sequence is coordinated through an electronic control (not shown). Said mechanisms 40, 42 and 44 travel conjointly with table 24 from a first A position, wherein the ART article is loaded in an upside down position, to a second B position where the ART article is inverted 180° leaving it upside-down, until it arrives to a third C position of article unloading, and, finally, to a fourth D position wherein all of the group of mechanisms of the finger opening and closing mechanism 40, of the bottom arm 42 and the inversion 44 are returned to their original position before arriving again to the article loading station A.

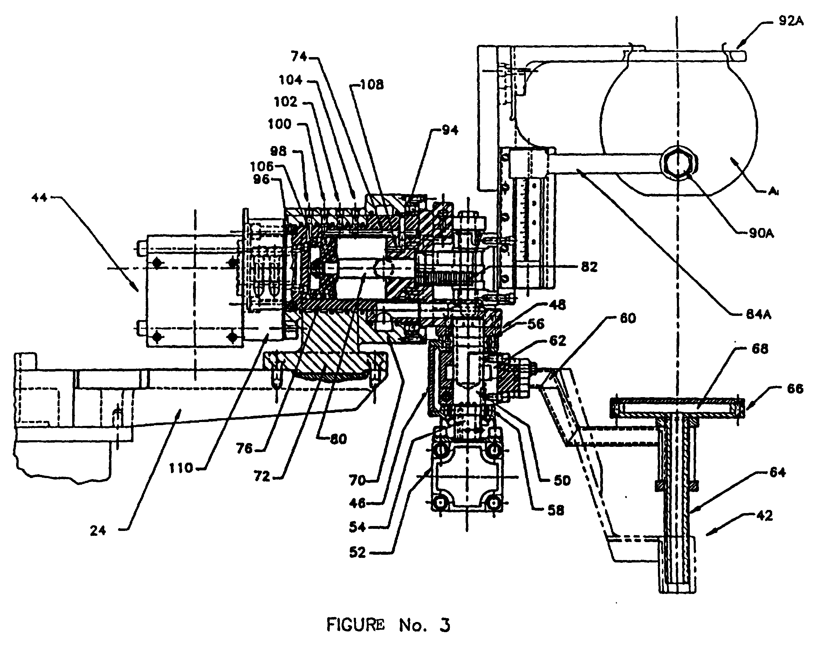

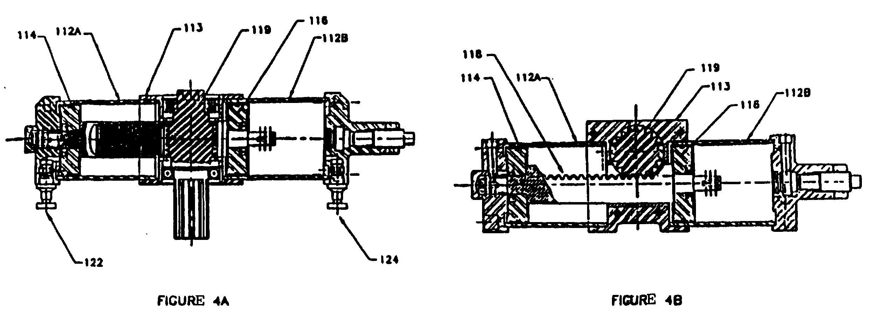

Making now reference to figures 3, 4a, and 4b, the following is a detailed description of the finger opening and closing finger mechanism 40, the bottom arm mechanism 42, and the inverting mechanism 44.

### BOTTOM ARM MECHANISM

First the bottom arm mechanism 42 will be described. It includes the following; a special support 46 which has a coupling plate 48 in its upper part, through which is coupled a finger opening and closing mechanism 40. The main support 46 includes an internal shaft 50, which is located along the entire length of said main support 46 and which is connected at its lower end with a rotating actuator 52 which has a pulling shaft 54. Radial bearings 56 and 58 are located between the internal shalt 50 and the main support 46, -- one on the upper part and the other on the lower part - to permit that the internal shaft 50 rotate on its own axis and through the rotating actuator 52. An arm support 60 coupled to the internal shaft 50 through a clamp 62 is moved with an angle of approximately 100° (see figure 1) in order to effect a translation movement between the first article loading position and a second article unloading position. The arm support 60 has at its free end a coupling with a threaded hollow shaft, which itself, supports a bottom plate 66, whose function is to hold the article during the loading stage. The bottom of the article is cooled by introducing pressurized air through the hollow section of the shaft 64 and the bottom plate 66.

### FINGER OPENING AND CLOSING MECHANISM

With respect to the finger opening and closing mechanism 40 it includes a supporting frame 70 which has a base 72 tightly coupled to the rotating table 24. The supporting frame 70 has coupled to it a joint cylinder 74 and piston 76 which is itself connected to a group of fingers 78 to open and close them around the articles. As can be observed in figure 3, the piston 76 includes a shaft 80. Said shaft 80 is connected by its end to the piston 76 and on its opposite end, it has a toothed bar section 82 (see figure 3). A pair of arms 84A, 84B which open or close around the article through the movement of piston 76 and shaft 80. Each one of the arms 84A and 84B include on one of its ends a toothed semi-circular sectin (not shown) located on each side of the toothed bar 82. Said arms 84A and 84B, being coupled on a pivot over a section of cylinder 74 through a pair of screws 88A and 88B (Figure 1). An armed guided 92A, 92B, for each one of the arms 84A and 84B which themselves are coupled with a pair of adjustable guides 74A, 74B which are transversally adjusted with respect to the diameter of the articles. The arms 84A and 84B in addition include support arms 90A, 90B to support the article during its inversion stage of 180°.

The joint cylinder 74 and piston 76 are located over a pair of ball bearings 94 and 96 located in the support frame 70, one of them in the front part and the other in the rear part. The assembly of support frame 70 and the joint cylinder 74 and piston 74 include, in addition, a series of actuators 98, 100 102 and 104 in order to exercise the function of moving the arm support 60 and the bottom plate 66, as well as to open and close the group of fingers 78. The actuators 98 and 100 introduce pressurized air through the cylinder chamber 74 to move piston 76 with a forward-backward movement. The air that is used to open the fingers 78 is introduced through an air conduit 106, which is located in the rear of the cylinder chamber 74, pushing the piston 76 forward. The air used for close the fingers 78 is introduced through of a air conduit 108, which is located in the front of the cylinder 74, to carry out the backward movement of the piston 76. Through actuators 102 and 104, pressurized air is introduced to move the arm support 60 and the bottom plate 66 with an angle of approximately 100° in order to carry out the transference movement between a first article loading position and the second article unloading position.

In addition, the rear part of cylinder 74 includes a hollow cylindrical section 110 which is coupled to the inverting mechanism 44 which will be described further on.

### INVERSION MECHANISM

Making reference to figures 4a and 4b, the inversion mechanism is shown in detail 44, which includes a cylinder 112 that is divided in two sections 112A andf 112B, leaving an intermediate part for coupling a guiding body 113. Each sector 112A and 112B of cylinder 112 have pistons 114 and 116. A toothed bar 118 is connected between pistons 114 and 116, which is given a longitudinal movement towards the right or towards the left side. A pinion 119 is coupled to the body of guide 113 to rotate on its own axis, which itself is coupled with teeth to the teethed bar 118. The pinion 119 having an arm with groves 120, which is located in a perpendicular position with respect to the toothed bar 118. Valves 122 and 124 are located at each end of cylinder 112 to introduce pressurized air to move pistons 114 and 116, and with this the toothed bar 118 in one direction or in the opposite one. Through this movement, the arm 120 of the pinion 119 also makes rotate its own axis. The arm 120 of the pinion 119 is coupled within the hollow cylindrical sector 110 of the finger opening and closing mechanism 40.

In this manner, when the inverting mechanism 44 effects its first movement, the finger opening and closing mechanism 40 and the mechanism of the bottom arm 42 are made to rotate with an angle of 180° for inverting the article, and in a second movement, for reverting said mechanisms 40 and 42 to their original position.

### FUNCTIONING OF THE APPARATUS

Now follows a description of the functioning of the article loading and unloading apparatus 10 taking as a base only the transference cycle of a station (for example station No. 32). As can be seen in figure 1, station 32 is positioned in front of a forming machine (not shown), with arms 84A and 84B and fingers 78A and 78B, which are in an open position. As soon as the forming machine comes to said position, the mechanism of the bottom arm 42 is moved with an approximate angle of 100°, from a position that is far from the ART article towards the position from underneath the bottom of article ART. Mean while, a mechanism of the forming machine (not shown) delivers the article in station 32, depositing the article onto the bottom plate 66 of the mechanism of bottom arm 42 and arms 84A and 84B and the group of fingers 78A and 78B close around the article ART. At this moment, the bottom of the article is cooled by introducing pressurized air through the bottom plate 68.

Later, the transference station 32 gyrates 90° to position B and it stops. In this position, the finger opening and closing mechanism 40 and the bottom arm mechanism 42 are made to rotate 180° through the inversion mechanism 44 for inverting the article ART 44. Once the article ART has been inverted, the bottom arm mechanism 42 is moved toward a position that is far from the stated bottom of the article ART.

Afterwards, the transference station 32, through the movement of the rotation table 24 gyrates again 90°, from station B to C, where the group of arms 84A and 84B and the group of fingers 78A and 78B for delivering the article in an inverted position. Once that the article ART is delivered, the transference station 32 is moved another 90°, towards position D, where the finger opening and closing mechanism 40 and the bottom arm mechanism 42 with an angle of 180° are inverted by means of the inversion mechanism 44 leaving ready the mechanism 32 in its original position, before arriving again to station A for a new cycle of loading and unloading of articles ART.

All and each one of the moving mechanisms are synchronized through an electronic control system (not shown), in order to regulate the opening and closing of the finger mechanism 40, the movement of the bottom arm 42, the movement of the inversion mechanism 44 and the indexing of the rotation table 24.

Similarly, even though the sequence that is followed by the articles in a transference station of the apparatus has been described, it should be understood that the articles can be handled simultaneously in the four transference stations.

Finally, it should be understood that the apparatus of this invention, which has been described above, is only a specific embodiment of the same and is presented as an illustration, and which the experts in the field will be able to understand the training provided by the same in order to effect changes in its design and distribution, which, however, are included within the true spirit and scope of the invention that is being claimed in the following claims.

## Claims

1. Apparatus for loading and unloading glass articles or similar articles which comprises a supporting structure, said supporting structure including a central shaft; a rotative supporting structure attached in axial coincidence with said central shaft; transportation stations that are spaced from each other and which are attached on said rotative supporting structure; driving means attached to said rotative supporting structure for trasmitting movement to said rotative supporting structure in a pre-established time relation between a loading position and an unloading position; transference and holding means by each one of the transporting means for holding and inverting the glass articles in a about of 180°, between said loading position and said unloading position of articles; and control means attached to the rotative supporting structure and to the transference and holding means in order to provide an operation driving sequence to said apparatus.

2. Apparatus for loading and unloading glass articles or similar articles as claimed in claim 1, wherein the transportation stations are four stations, said stations being are spaced at 90° from each other.

3. Apparatus for loading and unloading glass articles or similar articles as claimed in claim 1, wherein the transference and holding means comprising: a finger opening and closing mechanism for opening and closing the fingers round a glass article; a bottom arm mechanism attached to said finger opening and closing mechanism for holding a lower part of the article during the loading position; and an inversion mechanism perpendicular attached to said finger opening-closing mechanism for jointly inverting and reverting said finger opening-closing mechanism and said bottom arm mechanism with an angular movement of 180°.

4. Apparatus for loading and unloading glass articles or similar articles as claimed in claim 3, wherein the bottom arm mechanism comprising: a main frame; a shaft mounted internally along the entire length of said main frame; a rotating actuator attached in the lower end of said shaft; bearing means attached between the shaft and the main frame to permit that said shall rotate on its own axis by means of said rotating actuator; a support arm attached to said shaft, said support arm being moved with an angular movement in order to carry out a translation movement between a first article loading position and a second article unloading position; and support means attached to the support arm for holding the lower end of the article during the loading position.

5. Apparatus for loading and unloading glass articles or similar articles as claimed in claim 4, wherein the support means comprising: a hollow shall attached on the support arm, said hollow shaft being adjusted on said support arm with a downward-upward movement in accirdance with the heigth of the articles; a bottom plate, said plate having a hollow section through which air under pressure is received for the cooling of the bottom of the article.

6. Apparatus for loading and unloading glass articles or similar articles as claimed in claim 3, wherein the finger opening-closing mechanism comprising: a supporting housing, said housing having a base coupled to said rotative supporting structure; a cylinder-piston assembly attached to rotate on its own shaft on the said housing, said piston including a shaft which is slidable with a forward and backward movement; and guide arms of articles which are pivotally attached to an end of the shaft in order to open or close said fingers in the articles loading and unloading position.

7. Apparatus for loading and unloading glass articles or similar articles as claimed in claim 6, wherein an end of the shaft includes at least a toothed bar section.

8. Apparatus for loading and unloading glass articles or similar articles as claimed in claim 6, wherein the guide arms comprising: a pair of support arms, said support arms bieng attached by one its ends to a series of fingers and by its opposite ends to semi-circular toothed sections, said toothed sections being attached in a pivot way on the support housing in order to move said support arms with an angular movement toward and far of contact with the articles.

9. Apparatus for loading and unloading glass articles or similar articles as claimed in claim 8, wherein the guide arms comprises: support arms in order to support to said series of fingers during steps of transference of the articles.

10. Apparatus for loading and unloading glass articles or similar articles as claimed in claim 6, wherein the cylinder-piston assembly is coupled between two ball bearing means located in said supporting housing.

11. Apparatus for loading and unloading glass articles or similar articles as claimed in claim 1, wherein the transference and holding means comprises, a plurality of actuators and a rotative device attached to rotate on the central shaft, said rotative device and actuators being attached to ccordinate the operation sequence of said transference and holding means.

12. Apparatus for loading and unloading glass articles or similar articles as claimed in claim 3, wherein the inversion mechanism comprises, a cylinder-piston assembly , said cylinder-piston assembly being divided in two sections, each section having a shaft; an intermediate hollow section between said two sections; a guiding body attached to the intermediate hollow section of said cylinder-piston assembly; a rack attached in both ends to each shaft, in order to be moved movement towards the right or towards the left side; a pinion attached in the body of guide to rotate on its own axis, said pinion being attached with said rack, said pinion having a shaft located in a perpendicular position with respect to the longitudinal position of said rack; and regulating valves located at each end of the cylinder for introducing pressurized air to said cylinder to move the pistons and rack in one direction or in the opposite one.

13. Apparatus for loading and unloading glass articles or similar articles as claimed in claim 6, wherein the guide arms of the articles are adjustables in accordance with the diameter of the articles.

14. Apparatus for loading and unloading glass articles or similar articles as claimed in claim 6 and 12, wherein the cylinder-piston assembly including a hollow cylindrical sector, said hollow cylindrical sector being attached on the shaft of the pinion of said inversion mechanism.
